# EUROPÄISCHE PATENTSCHRIFT

(11) **EP 1 538 804 B1**
(45) Veröffentlichungstag und Bekanntmachung des Hinweises auf die Patenterteilung: **18.05.2011**
(21) Anmeldenummer: 04027953.1
(22) Anmeldetag: 25.11.2004
(51) Int. Cl.: H04L 29/06

(54) **Verfahren zum Verringern des Transportvolumens von Daten in Datennetzen**
Method for reducing the volume of data to be transmitted in data networks
Procédé de réduction du volume des données de transport dans les réseaux de données

(30) Priorität: 02.12.2003 DE 10356724
(43) Veröffentlichungstag der Anmeldung: 08.06.2005
(73) Patentinhaber: Deutsches Zentrum für Luft- und Raumfahrt e.V., 51147 Köln (DE)
(72) Erfinder: Angermann, Michael, 82166 Gräfelfing (DE); Kammann, Jens, 82205 Gilching (DE); Robertson, Patrick, Dr., 82541 Ammerland (DE); Wasel, Christian, 81369 München (DE)
(74) Vertreter: von Kreisler Selting Werner

(56) Entgegenhaltungen:
- WO-A-01/61438
- WO-A-2004/073281
- US-B1- 6 397 259
- VAL HENSON: "An Analysis of Compare-by-hash" WORKSHOP ON HOT TOPICS IN OPERATING SYSTEMS, XX, XX, 19. Mai 2003 (2003-05-19), Seiten 1-6, XP002292468
- STERBENZ, TOUCH: "High-Speed Networking" 2001, WILEY , CANADA * Seite 456 - Seite 462 *

## Beschreibung

Die Erfindung betrifft ein Verfahren zum Verringern des Transportvolumens von Daten in Datennetzen, wobei von einer Datenquelle zu einem Client über einen Übertragungsweg bereits übertragene Content-Daten beim Client für eine spätere Wiederbenutzung nach Art des sogenannten Caching-Verfahrens zwischengespeichert werden. Ein derartiges Verfahren ist aus EP 1 308 853 A1 bekannt.

Da der Transport von Daten in Datennetzen stets mit Kostenaufwand und Wartezeit verbunden ist, werden verschiedene Techniken eingesetzt, um das Datentransportvolumen zu reduzieren. Ein häufig zu diesem Zweck angewandtes Verfahren besteht darin, bereits übertragene Daten beim Client zur eventuellen Wiederbenutzung zu speichern. Dieses Verfahren wird als "Caching" bezeichnet. Hierbei entsteht das Problem, dass die Aktualität der gespeicherten Daten sichergestellt bzw. überprüft werden muss.

Es handelt sich hierbei um ein Problem, das nicht nur vorkommt, wenn ein Vorabrufen ("Prefetching") von Content ausgeführt wird, sondern in jedem Fall dann auftritt, wenn Kopien von Daten gehalten werden, was darin liegt, dass stets die Möglichkeit einer Änderung der Originaldaten besteht. Immer wenn sich eine solche Änderung ereignet, ist die Kopie überholt oder ungültig, wobei "überholt" bedeutet, dass die Originaldaten sich geändert haben, und "ungültig" besagt, dass die Kopie überholt ist und sich der Gebrauch der überholten Kopie negativ auswirkt. Gewöhnlich ist es zu vermeiden, dass ein Benutzer der Daten eine überholte Version empfängt. Algorithmen und Protokollerweiterungen, die einen solchen Gebrauch von überholten Daten verhindern, werden gewöhnlich "Cache-Invalidierungsmethoden" genannt und sind ein Gebiet intensiver Untersuchung mit der Bezeichnung Cache Konsistenz.

Bei der hier betrachteten Cache-Konfiguration und -Anwendung lassen sich vier bekannte und grundsätzlich unterschiedliche Methoden unterscheiden, nämlich die zeitliche Invalidierung, die ortsabhängige Invalidierung, die aktive Validierung/Invalidierung durch den Client und die Invalidierung durch Rückfrage.

Bei der zeitlichen Cache-Invalidierung wird ein Ablaufdatum verwendet, das der Kopie der Daten zugewiesen ist. Nach diesem Ablaufdatum wird die Kopie als überholt angesehen. Diese Methode wird bei dem im World Wide Web eingesetzten HTTP-Protokoll praktiziert, indem das Ablaufdatum mit dem optionalen "Expires"-Header-Feld (z.B. Expires: Wed. 31 Dec 2003 18:00:00 GMT) übertragen wird. Es wird dann die URL und das Ablaufdatum verglichen. Es sollte angemerkt werden, dass diese Methode keine allgemeine Lösung des Cache-Konsistenzproblems ist, sondern eine Übereinkunft zwischen dem Benutzer und dem Provider von Daten bildet, wobei der Provider sicherstellt, dass das Original bis zum Ablaufdatum nicht verändert wird oder dass bei seiner Veränderung vor dem Ablaufdatum keine negativen Auswirkungen durch Verwendung der überholten Kopie entstehen, d.h. die Daten sind zwar überholt, aber nicht ungültig.

Die ortsabhängige Cache-Invalidierung ist aus dem Aufsatz von B. Zheng, J. Xu, D.L. Lee: "Cache Invalidation and Replacement Strategies for Location-Dependent Data in Mobile Environments" in "IEEE Transactions on Computers", Vol.51, No.10, Oktober 2002, Seiten 1141 bis 1153 vorgeschlagen worden. Diese Methode betrachtet den Fall eines mobilen Benutzers mit bekannter geographischer Position, für den die Daten nur dann als gültig angesehen werden, wenn er sich innerhalb eines bestimmten geographischen Gebiets befindet. Als ein Beispiel wird die Abfrage nach dem "nächstgelegenen Restaurant" angegeben. Das Ergebnis dieser Abfrage hängt ganz eindeutig vom Ort des Benutzers ab. Bewegt sich der Benutzer einmal in ein Gebiet hinein, in dem ein anderes Restaurant näher ist, dann ist das Ergebnis nicht mehr gültig. Zur Erzielung einer empfindlichen Validierung wird bei dieser bekannten Methode vorgeschlagen, ein Gebiet, das als Geltungsbereichsgebiet bezeichnet wird, mit der Kopie der Daten zu speichern. Abfragen, welche die Suche nach einem Objekt mit dem Prädikat "nächstgelegenes" spezifizieren, werden Segmente eines sogenannten Voronoi-Diagramms. Die Daten werden dann als überholt und ungültig angesehen, wenn der Benutzer das Geltungsbereichsgebiet verlässt.

Wenn die aktive Validierung durch den Client angewandt wird, trägt der Client die Verantwortung, die Kopie jedesmal zu validieren, wenn auf die Kopie zugegriffen wird. Er kontaktiert deshalb den Server, der die Originaldaten enthält, und fragt an, ob die Originaldaten seit dem Zeitpunkt, zu dem die Kopie angefertigt worden ist, geändert worden sind. Zu diesem Zweck speichert die Cache-Instanz diesen Zeitpunkt mit der Kopie. Innerhalb des HTTP-Protokolls wird diese Methode immer dort angewandt, wo ein Client ein besonderes Verfahren, gewöhnlich GET, benutzt und es durch einen "If-Modified-Since"-Header unter eine Bedingung stellt. (z.B. If-Modified-Since: Thu, 27 Mar 2003 11:20:00 GMT). Wenn sich das Dokument seit der spezifizierten Zeit geändert hat, gibt der Server die neue Version frei. Wenn es sich nicht geändert hat, gibt der Server einen Error-Code (304) frei, der dem Client besagt, dass die Kopie noch gültig ist.

Die Methode der Invalidierung durch Rückfrage verlangt, dass der Server alle Kopien verfolgt, die angefertigt worden sind. Immer wenn die Originaldaten verändert worden sind, meldet der Server, d.h. die Datenquelle, auf Anfrage aktiv allen Instanzen, die Kopien halten, dass eine neuere Version vorhanden ist. Diese Methode wird innerhalb des HTTP-Protokolls nicht realisiert.

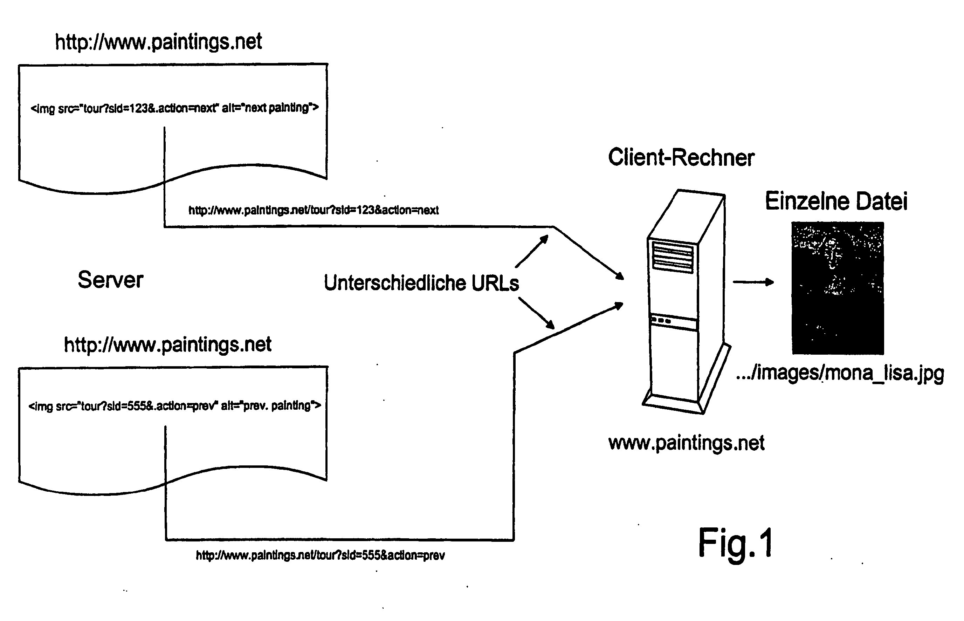

Ein weiterer wichtiger Punkt, der einen starken praktischen Einfluss auf das Caching und Vorabrufen ("Prefetching") hat, betrifft den dynamisch erzeugten Content. Eine große und anwachsende Anzahl von Websites macht Gebrauch von der modernen Webserver-Fähigkeit, Nutzer-Sitzungen durch die dynamische Erzeugung der Links, z.B. innerhalb HTML-Dateien, zu verfolgen. Wenn eine Anfrage entsprechend einem dynamisch erzeugten Link beim Server ankommt, ist die Server-Anwendung dazu fähig, die Informationen zu den notwendigen Dateien von der Zusatzinformation zu trennen, die zum Verfolgen der Sitzungen verwendet wird. Im Ergebnis kommt es oft vor, dass ein identischer Content unter vielfach verschiedenen URLs verabreicht wird. Häufig werden die ungünstigen Auswirkungen dieser Erscheinung als Argumente gegen die Anwendung von Caching und Vorabrufen ("Prefetching") angeführt, da der Prozentsatz von cachingfähigen Dokumenten erheblich verringert sein kann. Fig.1 zeigt diesen Fall anhand eines Beispiels mit zwei unterschiedlichen URLs und dabei identischem, dynamisch erzeugten Content.

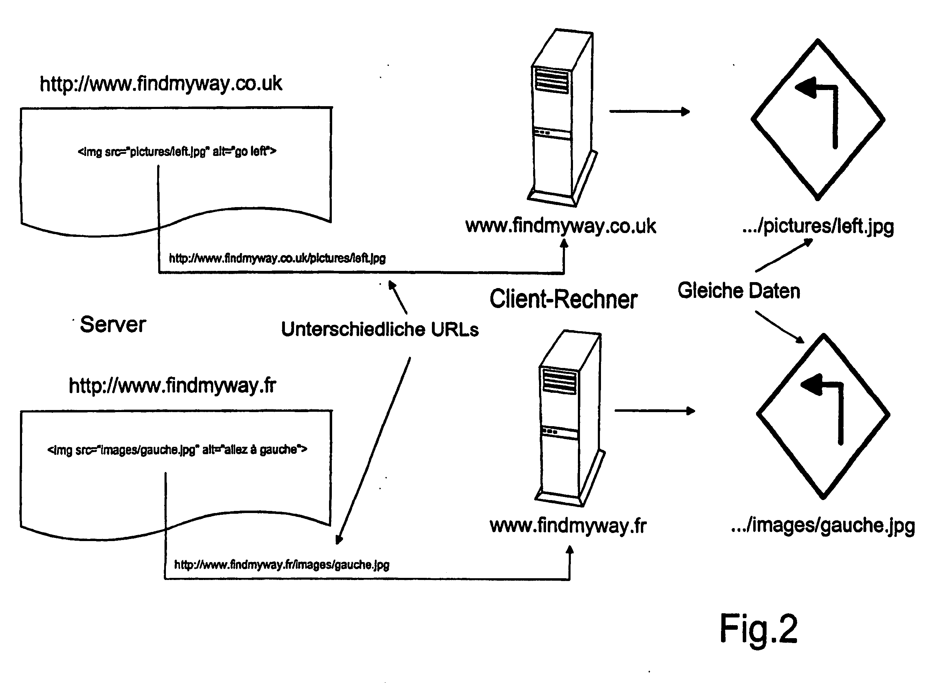

Eine ähnliche Erscheinung tritt auch bei statischem Content in Fällen auf, bei denen die gleichen Daten, z.B. für ein bestimmtes, für ein Symbol benutztes Bild, durch mehrere Websites unter potentiell unterschiedlichen Dateinamen verwendet werden. Dieser Effekt behindert das Caching und Vorabrufen ("Prefetching") nicht, da alle Instanzen der Daten cachingfähig sind und wiederbenutzt werden können. Nichtsdestoweniger könnten zusätzliche Übertragungs- und Speicherbetriebsmittel eingespart werden, wenn die Qualität/Identität der Daten detektiert werden könnte. Fig.2 zeigt diesen Fall anhand eines Beispiels mit zwei unterschiedlichen URLs und dabei identischem, statisch erzeugten Content.

Die existierenden Verfahren zur Cache-Validierung weisen also vor allem große Schwächen bei dynamisch erzeugtem Content, insbesondere durch Webanwendungen oder Skripte, wie z.B. PHP, ASP, Servlets, JSP oder Perl, auf. Zum einen werden Daten, deren URL sich geändert hat bzw. deren URL dynamisch erzeugt worden ist, unnötigerweise erneut übertragen, obwohl sie inhaltsgleich sind, und zum anderen werden Daten, deren URL gleich geblieben ist, nicht erneut übertragen, obschon es nötig gewesen wäre.

Die Punkte der Caching-Konsistenz und dynamischen Content-Erzeugung sind an dieser Stelle besonders herausgearbeitet worden, um das durch die Erfindung vorgestellte Verfahren zum Erlangen einer besseren Verständlichkeit aufzubereiten.

Die PCT-Anmeldung WO 01/61438 A2 befasst sich grundsätzlich mit Verfahren, bei denen Datenfelder und Programme einer Vielzahl von Clients nicht nur oder überhaupt nicht lokal jeweils auf deren Computer-Festplatten, sondern auf einem über Netzwerkverbindungen erreichbaren, entfernten Datenaufbewahrungsspeicher gespeichert werden sollen. Diese Datenaufbewahrungsart erlaubt es den Nutzern, auf die gleiche Datenumgebung von den verschiedensten Workstations des Netzes aus zuzugreifen. Wesentlicher Ausgangspunkt ist dabei die Erwartung, dass entfernte und mittels Webbrowser zugängliche Datenaufbewahrungsspeicher für den PC-Nutzer immer interessanter werden. Insbesondere handelt es sich hierbei um ein Verfahren, bei dem mehr als ein mit einem Übertragungsnetz verbundenes Client-Programm das gleiche Datenfeld in einem mit dem Netz verbundenen Datenaufbewahrungsspeicher speichert, wobei das Datenfeld unter Verwendung eines aus dem Content des Datenfeldes abgeleiteten Sicherheitsschlüssel verschlüsselt wird, ein digitaler Fingerabdruck des Datenfeldes bestimmt wird und das Datenfeld im entfernten Datenaufbewahrungsspeicher an einem mit dem digitalen Fingerabdruck verknüpften Ort gespeichert wird.

Der Erfindung liegt die Aufgabe zu Grunde, bei Verfahren, bei welchen von einer Datenquelle zu einem Client bereits übertragene Daten beim Client für eine spätere Wiederbenutzung nach Art des sogenannten Caching-Verfahrens puffergespeichert werden, die Aktualität bzw. die Synchronität der im Caching-Speicher gespeicherten Daten mit denen der Datenquelle sicherzustellen, wobei keine Kooperation der Betreiber der Datenquellen notwendig ist.

Gemäß der Erfindung, die sich auf ein Verfahren wie in Anspruch 1 bezieht, wird diese Aufgabe in vorteilhafter Weise gelöst. Z.B. kann das Verfahren dadurch durchgeführt werden, dass in einem der Datenquelle zugeordneten, zentralen Proxy-Server aus den auf eine Anfrage des Clients von der Datenquelle ausgegebenen Antwortdaten ähnlich einer Prüfsummenbildung durch Rechnung ein Message-Digest gebildet wird, dass dieser Message-Digest in diesem Proxy-Server durch Vergleichen dahingehend überprüft wird, ob bereits vorher ein übereinstimmender Message-Digest in diesem Proxy-Server für den betreffenden Client gespeichert worden ist, dass dann, wenn bereits ein übereinstimmender Message-Digest für den betreffenden Client in diesem Proxy-Server eingespeichert ist, dem Client von diesem Proxy-Server zusammen mit dem Message-Digest eine Antwortmeldung übermittelt wird, welche die Tatsache signalisiert, dass die Content-Daten dort im Cache-Speicher eines diesem Client zugeordneten Proxys gefunden werden können, der den Message-Digest als einen Schlüssel zum Aufspüren der Content-Daten aus seinem Cache-Speicher benutzt und diese an den Client liefert, bei welchem die Content-Daten dann präsentiert werden, und dass nur dann, wenn in dem der Datenquelle zugeordneten, zentralen Proxy-Server bei der vergleichenden Überprüfung des Message-Digests festgestellt wird, dass dort kein übereinstimmender, vorher eingespeicherter Message-Digest vorhanden ist, als Antwort zum Client die vollständigen Content-Daten einschließlich dem Message-Digest übertragen werden, wobei die Content-Daten zusammen mit dem einer späteren Identifizierung als Schlüssel dienenden Message-Digest im Cache-Speicher des dem Client zugeordneten Proxys gespeichert werden.

Durch den Einsatz eines Proxy-Systems, das sich als Split-Proxy mit Cache- und Hashing-Funktionalität bezeichnen lässt, und der Überprüfung und des Vergleichs der Daten anhand von Message-Digests, die ähnlich gebildet werden können wie die Prüfsummenbildung z.B. gemäß RPC 1994 (MD5), werden die unter der Aufgabenstellung angesprochenen Probleme vollständig gelöst. Hierbei ist keine Kooperation mit den Betreibern der Datenquellen erforderlich.

Das Verfahren nach der Erfindung ermöglicht es dem Endnutzer und/oder dem Betreiber der Zugangsnetze, diese effizienter auszunutzen und damit Zeit und Kosten zu sparen, was insbesondere bei Mobilfunknetzen eine sehr hohe Bedeutung hat.

Das Verfahren nach der Erfindung umfasst eine besondere Arbeitsarchitektur, Algorithmen und Protokolle, deren Kombination die gestellte Aufgabe vor allem auch bei typischen mobilen Szenarien löst. Die Wirkungen des Verfahrens sind vor allem unter der Voraussetzung wirksam, dass für ein drahtloses Zugangslink die Kommunikationskapazität bedeutend geringer und die Wartezeit erheblich höher als innerhalb eines sich anschließenden Kernnetzwerks ist.

Unter dieser Voraussetzung ist es möglich und vorteilhaft, die Validierung des ganzen Contents zu versuchen, sogar wenn dieser sich nicht explizit für das Caching empfiehlt. Innerhalb des Verfahrens nach der Erfindung wird davon abgegangen, zum Identifizieren und Indexieren der Daten URLs oder URIs zu verwenden. Anstelle davon werden in vorteilhafter Weise an sich bekannte Message-Digestion-Algorithmen wie z.B. MD5 und SHA-1 benutzt, die einen schnellen Vergleich von Daten auf Gleichheit hin erleichtern. Dadurch wird man in die Lage versetzt, die Validität des Contents ohne jeglichen Blick auf die - potentiell dynamisch - zugewiesene Kennzeichnung der Daten zu prüfen.

Vorteilhafte Weiterbildungen des Verfahrens nach der Erfindung sind in den unmittelbar oder mittelbar auf den Patentanspruch 1 rückbezogenen Unteransprüchen angegeben.

Der Client kann mit seinem Proxy vom Aufbau her sehr vorteilhaft in einem mobilen drahtlosen Informationsendgerät betrieben werden, das für Datendienste wie z.B. WAP oder Web sowie alle weiteren Dienste für mobile Endgeräten wie z.B. Mobiltelefone, PDAs oder Laptops zugänglich ist. Dabei wird die Kommunikation zwischen dem im mobilen drahtlosen Informationsendgerät untergebrachten Proxy des Clients und dem Proxy-Server entweder über ein öffentliches Mobilfunknetz oder über einen residenten Proxy, der über ein Kurzstreckenfunksystem, wie z.B. Bluetooth oder W-LAN, mit dem Proxy des Clients kommuniziert, und ein öffentliches Festnetz, an welches sowohl der residente Proxy als auch der der Datenquelle zugeordnete Proxy-Server angebunden sind, vorgenommen.

Das Verfahren nach der Erfindung wird nachfolgend anhand von Zeichnungen erläutert. Es zeigen:
- Fig.1: anhand eines Blockschaltbildes den bekannten und bereits vorher geschilderten Fall eines Beispiels mit zwei unterschiedlichen URLs und dabei identischem, dynamisch erzeugten Content,
- Fig.2: anhand eines Blockschaltbildes den ebenfalls bekannten und vorher auch schon abgehandelten Fall eines Beispiels mit zwei unterschiedlichen URLs und dabei identischem, statisch erzeugten Content,
- Fig.3: in einem schematischen Blockschaltbild ein Beispiel einer vollen Architektur eines Systems zur Durchführung des Verfahrens nach der Erfindung,
- Fig.4: den Verlauf eines Hash-Protokolls zur Benutzung beim Verfahren nach der Erfindung, falls vorher noch kein identischer Content von einer Server-Anwendung zu einer Client-Anwendung übertragen worden ist,
- Fig.5: den Verlauf eines Hash-Protokolls zum Einsatz beim Verfahren nach der Erfindung, falls vorher bereits ein identischer Content von der Server-Anwendung zur Client-Anwendung mit Cache übertragen worden ist, und
- Fig.6: in einer graphischen Funktionsdarstellung die Abhängigkeit der Zeitdauer der Hash-Berechnung, also der Message-Digest-Berechnungszeit, von der Datenlänge für die in Tabelle 1 angegebenen Realisierungsfälle bei Anwendung zweier verschiedener Message-Digestion-Algorithmen, nämlich MD5 und SHA-1.

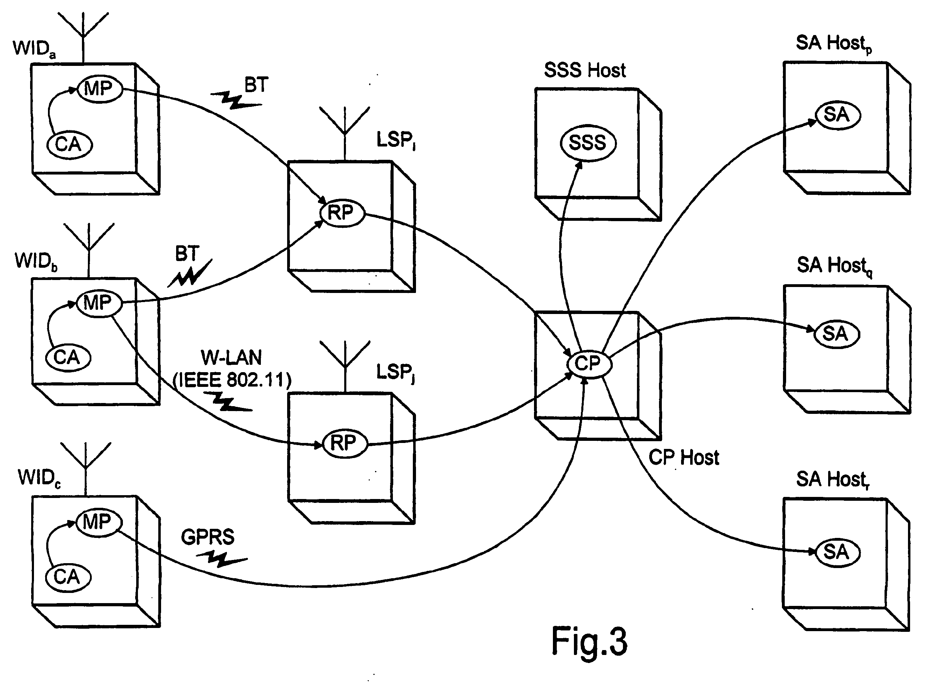

In dem in Fig.3 dargestellten Architekturbeispiel sind drei mobile drahtlose Informationsendgeräte WIDₐ, WID_{b} und WID_{c} vorgesehen, die jeweils im betreffenden Geräteaufbau eine Client-Anwendung CA und einen mobilen Proxy MP enthalten. Die Client-Informationsendgeräte WIDₐ, WID_{b} und WID_{c} können beispielsweise Mobiltelefone, PDAs oder Laptops sein und sind allesamt über Funk angebunden. Dabei kommuniziert der mobile Proxy MP des ersten Client-Informationsendgerätes WIDₐ über eine Bluetooth-Kurzstreckenfunkstrecke BT mit einem residenten Proxy RP einer lokalen Dienststelle LSPᵢ.

Der mobile Proxy MP des zweiten Client-Informationsendgerätes WID_{b} kommuniziert über ein Bluetooth-Kurzstreckenfunksystem BT mit dem residenten Proxy RP der lokalen Dienststelle LSPᵢ und über eine W-LAN-Funkstrecke gemäß IEEE 802.11 mit dem residenten Proxy RP einer zweiten lokalen Dienststelle LSPⱼ.

Das dritte Client-Informationsendgerät WID_{c} erreicht mit seinem mobilen Proxy MP keine lokale Dienststelle, sondern kommuniziert über ein öffentliches landgestütztes Mobilfunknetz, das im Architekturbeispiel GPRS-Funktionalität aufweist, direkt mit einem zentralen Proxy-Server CP, der drei verschiedenen Server-Anwendungen SA mit abfragbaren Datenquellen auf drei Host-Servern SA Hostₚ, SA Host_{q} und SA Hostᵣ zugeordnet und mit diesen über Leitungen verbunden ist. An diesen zentralen Proxy-Server CP sind auch die beiden lokalen Zugangsknoten LSPᵢ und LSPⱼ mit ihren residenten Proxys RP über Leitungen angebunden. Zu Statistikzwecken ist an den zentralen Proxy CP noch ein Situationsstatistik-Server SSS angebunden.

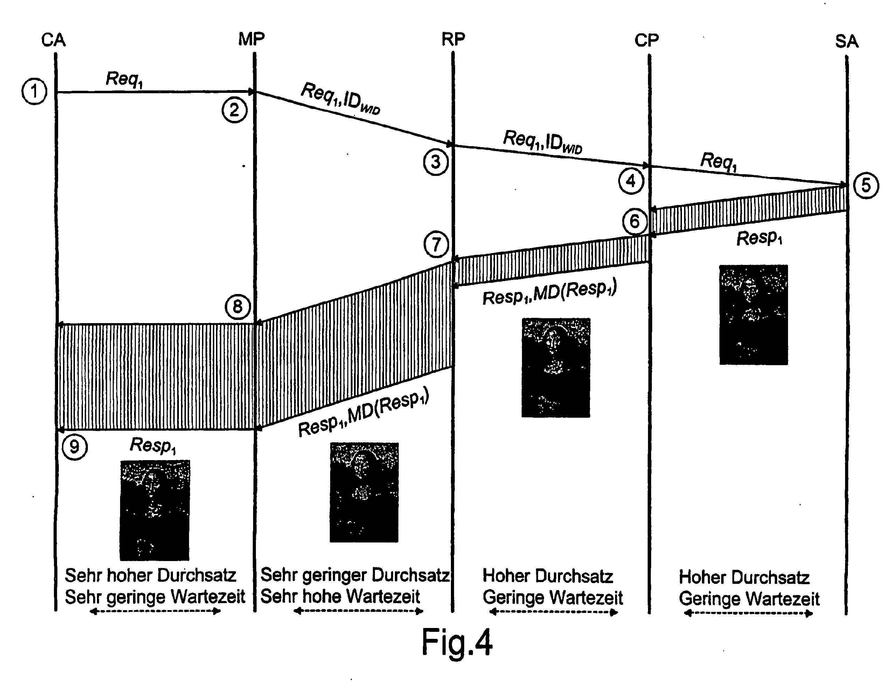

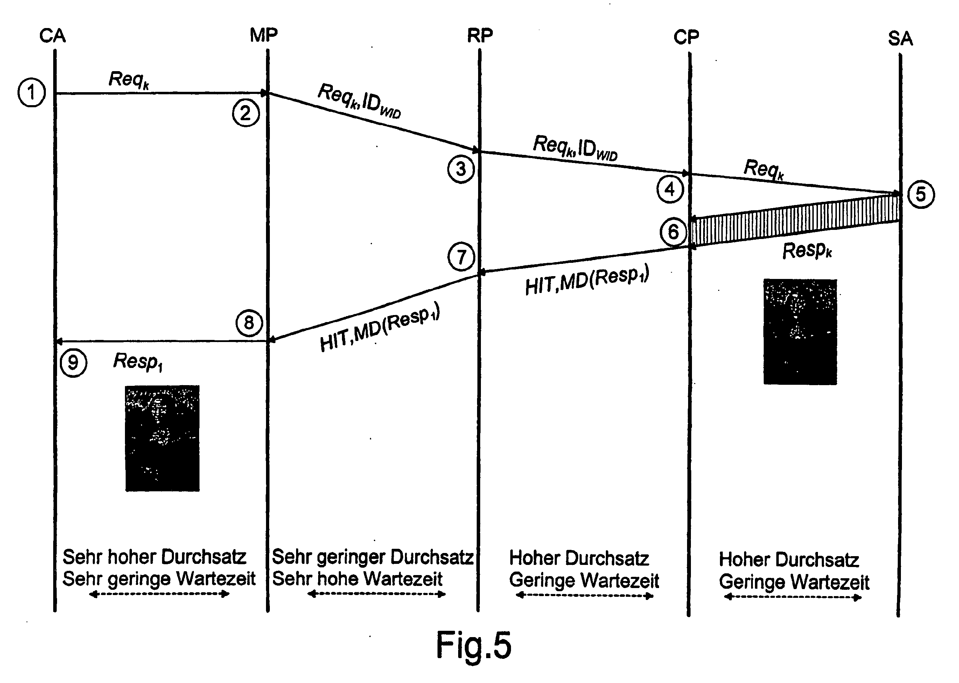

Fig.4 und Fig.5 stellen die Kommunikation zwischen den fünf Entitäten CA (= Client-Anwendung), MP (= mobiler Proxy), RP (= residenter Proxy), CP (= zentraler Proxy-Server) und SA (= Server-Anwendung) gemäß einem vorgeschlagenen Hash-Protokoll dar, das zum Ausräumen der vorher beschriebenen nachteiligen Effekte bei der dynamischen Content-Erzeugung zweckmäßig eingesetzt wird. Es ist wichtig, die erheblichen Unterschiede in der Datenübertragungsrate, der Wartezeit und im Kostenaufwand der verschiedenen Kommunikationsverbindungen im Gedächtnis zu behalten.

Die Client-Anwendung CA und der mobile Proxy MP liegen strukturell auf der gleichen Vorrichtung, so dass davon ausgegangen werden kann, dass hier hohe Datenübertragungsraten erreicht werden, wogegen zwischen dem mobilen Proxy MP und dem residenten Proxy RP die Verbindung auf Grund der Eigenschaft des drahtlosen Mediums stets langsamer als alle anderen Verbindungen ist. Diese verschiedenen Datenübertragungsraten und Wartezeiten sind in Fig.4 und Fig.5 angegeben. Zur verständlicheren Bezugnahme sind dort Ereignisse oder Schritte von Interesse mit entsprechenden, mit einem Kreis umrahmten Zahlen markiert, z.B. mit ① im Text und in den Figuren.

Es wird mit ① begonnen. Hier gibt die Client-Anwendung CA eine Datenübermittlungsanfrage *Req*₁ zum mobilen Proxy MP aus, der auf der gleichen Vorrichtung angeordnet ist. Der mobile Proxy MP enthält eine einzige Identität ID*_{WID}*, welche das drahtlose Informationsendgerät WID im Header kennzeichnet, und leitet bei ② die Anfrage *Req*₁ über eine drahtlose Kurzbereichskommunikation zum residenten Proxy RP an einen erreichbaren lokalen Zugangsknoten LSP weiter. Vom residenten Proxy RP wird die Anfrage *Req*₁ bei ③ unverändert zum zentralen Proxy CP weitergeleitet, der seinerseits bei ④ die Anfrage *Req*₁ zur eigentlichen Server-Anwendung SA bei ⑤ weiterleitet. Wenn keine lokale Dienststelle LSP zugänglich sein sollte, wird der residente Proxy RP ausgelassen und die Anfrage *Req*₁ wird über ein öffentliches Mobilfunknetz und die geeigneten Zugänge direkt zum zentralen Proxy CP bei ④ weitergeleitet.

Die Server-Anwendung SA empfängt bei ④ und zerlegt bei ⑤ die Anfrage *Req*₁, erzeugt die Antwort *Resp*₁ mit den angefragten Daten und startet damit, diese Daten, die im Beispiel die Daten eines Bildes sind, zum zentralen Proxy CP zu senden. In typischer Weise besteht keine Notwendigkeit, die Identität ID*_{WID}* in die Antwort *Resp*₁ mit einzuschließen, da alle Kommunikationen dazwischen verbindungsorientiert sind. Die Antwort *Resp*₁ ist daher mit der entsprechenden Anfrage automatisch verbunden.

Dies trifft für die allgemeine Praxis zu, um HTTP-Verkehr über TCP zu transportieren. Nichtsdestoweniger ist dies kein "Muss", da HTTP auch über verbindungslose (z.B. UDP) oder nachrichtenorientierte (z.B. E-Mail) Kanäle zwischen Proxys transportiert werden kann. In diesem Fall erfordert es das Verfahren nach der Erfindung, in die Antworten auch Informationen miteinzuschließen, welche das jeweilige drahtlose Informationsendgerät WID identifizieren.

Der zentrale Proxy CP bei ⑥ wartet, bis die vollständige Antwort *Resp*₁ angekommen ist. Dann berechnet der zentrale Proxy CP den in der Antwort *Resp*₁ eingeschlossenen Message-Digest der Daten. Für jedes drahtlose Informationsendgerät WID, das durch den zentralen Proxy CP bedient wird, hält dieser eine Liste, welche die Message-Digests aller Antwortdaten enthält, die zu der besonderen Vorrichtung WID gesendet worden sind. Wenn die Daten vorher nicht zum drahtlosen Informationsendgerät WID gesendet worden sind, wird ihr Message-Digest MD nicht in dieser Liste gefunden.

In diesem Fall, der in Fig.4 dargestellt ist, schließt der zentrale Proxy CP bei ⑥ den Message-Digest MD in die Liste und in den Antwort-Header mit ein und schickt die vollständige Antwort *Resp*₁ zum residenten Proxy RP. Der residente Proxy RP führt keinerlei Operation an den Daten oder an den Headers aus. Es startet unmittelbar der Vorgang ⑦, um den Datenfluss vom residenten Proxy RP zum mobilen Proxy MP weiterzuleiten. Die Kommunikation zwischen dem residenten Proxy RP und dem mobilen Proxy MP ist relativ langsam, wie bereits vorher erwähnt worden ist. Deswegen müssen die vom zentralen Proxy CP ankommenden Daten in eine Warteschlange eingereiht werden.

Nach Ankunft der Anfangsbytes der Antwort *Resp*₁ am mobilen Proxy MP bei ⑧, wird damit begonnen, diese zur Client-Anwendung CA weiterzuleiten. Diese Verbindung ist gewöhnlich die schnellste in der Übertragungskette und zwar deswegen, weil durch eine Interprozesskommunikation innerhalb einer Vorrichtung transportiert wird. Daher müssen in der Regel auch keine oder nur kurze Warteschlangen aufgebaut werden. Der eingeschlossene Message-Digest MD wird in einer Tabelle zusammen mit den Antwortdaten zur potentiellen späteren Wiederverwendung gespeichert. Dieses bildet die aktuelle Caching-Operation. Danach wird die vollständige Antwort *Resp*₁ bei ⑨ an die Client-Anwendung CA weitergeleitet. Die Client-Anwendung CA kann die Ergebnisse dem Benutzer präsentieren bzw. die Dokumentbeschreibung für Bezugnahmen analysieren, die auf eingebettete Objekte hinweisen.

Im Zusammenhang mit Fig.5 wird nachfolgend aufgezeigt, wie trotz eines höheren Aufwandes durch Anwendung des Verfahrens nach der Erfindung die Kommunikationsbelastung reduziert wird.

Zu einem späteren Zeitpunkt soll von der Client-Anwendung CA eine weitere Datenübermittlungsanfrage *Reqₖ* ausgegeben werden. Die Schritte ① bis ④, welche die Abwicklung einer Anfrage *Reqₖ* betreffen, sind identisch zum vorher erläuterten Fall der Fig.1. Im Unterschied dazu spielt sich jedoch diesmal das Geschehen so ab, dass die bei ⑤ in der Antwort *Respₖ* enthaltenen Daten eine genaue Kopie, d.h. im dargestellten Beispiel das gleiche Bild, der bereits vorher einmal zum drahtlosen Informationsendgerät WID transportierten Daten sind.

Dieser Umstand wird detektiert, da im zentralen Proxy-Server CP der Message-Digest MD dieser Antwort *Respₖ* berechnet wird und dieses Mal in der Liste gefunden wird, die für das besondere drahtlose Informationsendgerät WID im zentralen Proxy CP gehalten wird. Der zentrale Proxy CP erzeugt dann bei ⑥ eine Antwort mit einem Header, der die Tatsache signalisiert, dass die Daten auf dem besonderen Informationsendgerät WID gefunden werden können (HIT), und mit dem Message-Digest MD(*Resp*₁).

Diese Kurzantwort HIT,MD(*Resp*₁) wird bei ⑥ vom zentralen Proxy-Server CP an den residenten Proxy RP gesendet, bei ⑦ vom residenten Proxy RP zum mobilen Proxy MP hin weitergeleitet und bei ⑧ am mobilen Proxy MP empfangen. Der mobile Proxy MP benutzt den Message-Digest MD(*Resp*₁) als einen Schlüssel zum Aufspüren der Daten aus seinem Cache und liefert diese als volle *Resp*₁ an die Client-Anwendung CA, wo der Content dann bei ⑨ im Beispiel in Form des Bildes präsentiert wird.

Es sollte an dieser Stelle betont werden, dass kein Zusammenwirken von Server-Anwendungen SA benötigt wird, damit sich das Verfahren nach der Erfindung entfalten kann.

Es ist zwar die Tatsache in Kauf zu nehmen, dass die Berechnung des Message-Digests Betriebsmittel und Zeit in Anspruch nimmt und somit eine zusätzliche Wartezeit einführt. Um diese unerwünschte zusätzliche Wartezeit einzuschätzen, sind Versuche für zwei verschiedene Message-Digest-Algorithmen, nämlich MD5 und SHA-1, auf drei verschiedenen Plattformen durchgeführt worden, die in der nachfolgenden Tabelle 1 aufgeführt sind.

**Tabelle 1**

| **Host-Server (SA)** | **Prozessor** | **Arbeitsspeicher** | **Betriebssystem** |
|---|---|---|---|
| **onyx** | Pentium IV 2 GHz | 512 MByte | MS Windows 2000 |
| **carla** | Pentium IV 2 GHz | 512 MByte | Linux 2.4 |
| **goldeneye** | UltraSPARC-IIe 500 MHz | 2048 MByte | SunOS 5.8 |

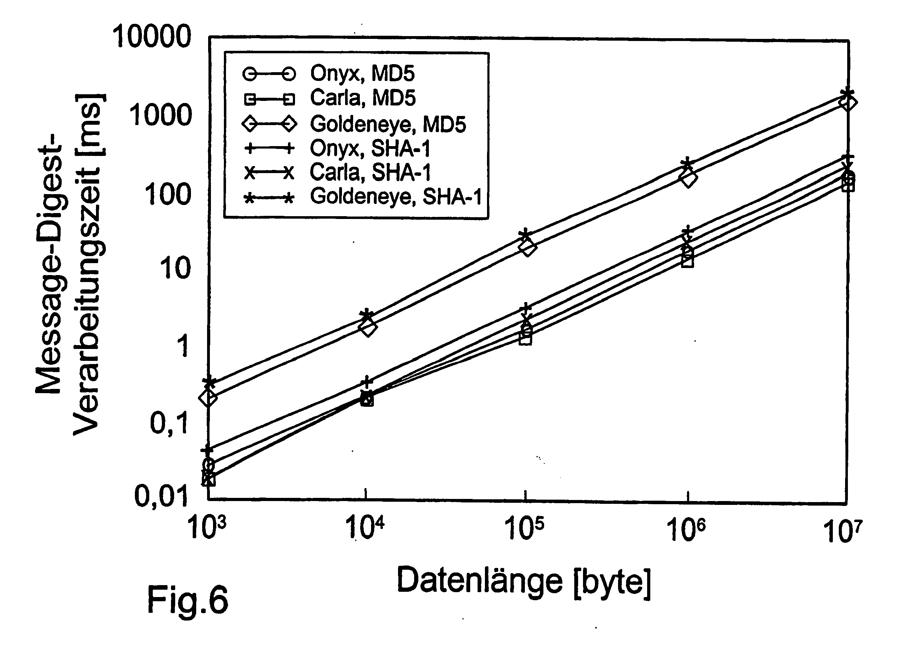

Es besteht besonderes Interesse an der Art der Zunahme (linear, polynomial, exponentiell, ...) von Berechnungszeit in Abhängigkeit von der Messagedaten-Länge. Die Ergebnisse der Versuche sind in Fig.6 abgebildet und zeigen mäßige Message-Digest-Berechnungszeiten [ms] mit lediglich linearer Zunahme bei zunehmenden Messagedaten-Längen [byte]. Es lässt sich ersehen, dass MD5 bei allen Plattformen marginal schneller als SHA-1 arbeitet. Dies ergibt sich zum Teil aus der geringeren Message-Digest-Länge für MD5. Die Ergebnisse erlauben den Schluss, dass die durch die Rechenzeit eingeführten Verzögerungen für jede beliebige gegebene Message-Digest-Länge erheblich kleiner als die Verzögerungen sind, die durch die begrenzte Datenübertragungsrate verursacht werden.

Es wird daher als ratsam angesehen, das erfindungsgemäß arbeitende Verfahren zur Cache-Validierung insbesondere für eine dynamische Content-Erzeugung und einen Dienst anzuwenden, der für mobile Vorrichtungen bereitgestellt wird. Ohne allerdings irgend eine Bevorzugung auszusprechen, ist MD5 als Standard-Message-Digest-Algorithmus innerhalb eines vorgeschlagenen Protokolls auf Grund seiner ausreichenden Länge, seiner geringfügig schnelleren Rechenzeit und seiner für eine große Anzahl von Plattformen vorhandenen Verfügbarkeit gewählt worden.

### Bezugszeichenliste

- BT: Bluetooth-Funkstrecke
- CA: Client-Anwendung
- CP: Zentraler Proxy-Server
- GPRS: Mobilfunknetz mit GPRS
- LSPᵢ, LSPⱼ: Lokale Dienststelle
- MD: Message-Digest
- MP: Mobiler Proxy
- RP: Residenter Proxy
- *Req*₁*, Reqₖ*: Anfrage
- *Resp*₁*, Respₖ*: Antwort
- SA: Server-Anwendung
- SA Hostₚ, SA Host_{q},SA Hostᵣ: Host-Server
- SSS: Situationsstatistik-Server
- W-LAN: W-LAN-Funkstrecke (IEEE 802.11)
- WIDₐ, WID_{b}, WID_{c}: Drahtloses Informationsendgerät

## Patentansprüche

1. Verfahren zum Verringern des Transportvolumens von Daten in Datennetzen, wobei von einer Server-Anwendung (SA) zu einem Client (CA) über einen Proxy-Server (MP, RP) und eine zentralen Proxy-Server (CP), bereits übertragene Content-Daten durch den Proxy-Server (MP, RP) beim Cilent (CA) für eine spätere Wiederbenutzung nach Art des sogenannten Caching-Verfahrens zwischengespeichert werden, **dadurch gekennzeichnet, dass** der zentrale Proxy-Server (CP)
eine durch eine erste URL spezifizierte Datenübermittlungsanfrage (*Req*₁) empfäng,
diese an eine Server-Anwendung (SA) weiterleitet,
eine erste Antwort (*Resp*₁) von der Server-Anwendung (SA) erhält, diese zusammen mit einem berechneten Message-Digest (MD) über den Proxy-Server (MP, RP) an den Client (CA) weiterleitet; eine durch eine zweite URL spezifizierte Datenübermittiungsanfrage (*Req*ₖ) empfängt, diese an eine Server-Anwendung (SA) weiterleitet,
eine zweite Antwort (*Resp*ₖ) von der Server-Anwendung erhält und im Falle des Findens des über die Antwort (*Resp*ₖ) berechneten Message-Digest (MD) in einer Liste eine Antwort an den Proxy-Server (MP, RP) mit einem Header sendet, der die Tatsache signalisiert, dass die Content-Daten unter Angabe des Message-Digest (MD) als Schlüssei auf dem Proxy-Server (MP, RP) zu finden sind, ohne die Content-Daten erneut zu übertragen.

2. Verfahren nach Anspruch 1, **dadurch gekennzeichnet, dass** als Message-Digestion-Atgorithmus in dem der Server-Anwendung (SA) zugeordneten, zentralen Proxy-Server (CP) bei der vergleichenden Überprüfung des Message-Digest (MD) mit Hashing-Funktionalität der MD5- oder SHA-1-Algorithmus eingesetzt wird, die einen schnellen Vergleich von Daten auf Gleichheit hin erleichtern.

3. Verfahren nach Anspruch 1 oder 2, **dadurch gekennzeichnet, dass** der Client (CA) mit seinem Proxy (MP, RP) in einem mobilen drahtlosen Informationsendgerät (WID) betrieben wird, das für Datendienste wie z.B. WAP oder Web zugänglich ist.

4. Verfahren nach Anspruch 3, **dadurch gekennzeichnet, dass** die Kommunikation zwischen dem im mobilen drahtlosen Informationsendgerät (WID) untergebrachten Proxy (MP) des Clients (CA) und dem der Server-Anwendung (SA) zugeordneten, zentralen Proxy-Server (CP) entweder über ein öffentliches Mobilfunknetz oder über einen residenten Proxy (RP), der über eine Kurzstreckenfunkstrecke, wie z.B. Bluetooth oder W-LAN, mit dem Proxy (MP) des Clients (CA) kommuniziert, und ein öffentliches Festnetz, an welches sowohl der residente Proxy (RP) als auch der Server-Anwendung (SA) zugeordnete zentrale Proxy-Server (CP) angebunden sind, vorgenommen wird.

5. Verfahren nach einem der vorhergehenden Ansprüche, **dadurch gekennzeichnet, dass** der dem Client (CA) zugeordnete Proxy (MP) in eine Client-Anwendung integriert wird.

6. Verfahren nach einem der vorhergehenden Ansprüche, **dadurch gekennzeichnet, dass** der zentrale Proxy-Server (CP) in eine Server-Anwendung (SA) integriert wird.

7. Verfahren nach einem der vorhergeden Ansprüche **dadurch gekennzeichnet, dass** in dem der Server-Anwendung (SA) zugeordneten, zentralen Proxy-Server (CP) statistische Daten erfasst werden.

## Claims

1. A method for reducing data transport volume in data networks wherein content data already communicated from a server application (SA) to a client (CA) over a proxy server (MP, RP) and a central proxy server (CP) is stored by said proxy server (MP, RP) on an intermediate basis in the manner of the so-called caching method at said client (CA) for later re-use, **characterized in that** said central proxy server (CP)
receives a data transmission request (Req₁) specified by a first URL,
transmits the same to a server application (SA),
receives a first response (Resp₁) from the server application (SA), transmits the same to the client (CA) together with a calculated message digest (MD) via the proxy server (MP, RP);
receives a data transmission request (Reqₖ) specified by a second URL, sends the same to a server application (SA),
receives a second response (Respₖ) from the server application and, if the message digest (MD) calculated from the response (Respₖ) is found in a list, sends a response with a header to the proxy server (MP, RP), said header signalling the fact that, when the message digest (MD) is indicated, the content data can be found as a key on the proxy server (MP, RP) without having to transmit the content data again.

2. The method as set forth in claim 1 **characterized in that** the MD5 or SHA-1 algorithm is employed as the message digestion algorithm in said central proxy server (CP) assigned to said server application (SA) in a comparative checking of said message digest (MD) with a hashing functionality to speed up comparing data for identity.

3. The method as set forth in claim 1 or 2 **characterized in that** said client (CA) is operated with its proxy (MP, RP) in a mobile wireless information device (WID) for use in data services such as e.g. WAP or web.

4. The method as set forth in claim 3 **characterized in that** communication between said proxy (MP) of said client (CA) accommodated in said mobile wireless information device (WID) and said proxy server (CP) assigned to the server application (SA) is undertaken either via a public mobile phone network or via a resident proxy (RP) communicating via a short-range wireless system such as e.g. Bluetooth or W-LAN to said proxy (MP) of said client (CA), and via a public fixed-line network to which both said resident proxy (RP) and said central proxy server (CP) assigned to the server application (SA) are linked.

5. The method as set forth in any of the preceding claims **characterized in that** said proxy (MP) assigned to the client (CA) is integrated in a client application.

6. The method as set forth in any of the preceding claims **characterized in that** said central proxy server (CP) is integrated in said server application (SA).

7. The method as set forth in any of the preceding claims **characterized in that** statistical data is gathered and stored in the said central proxy server (CP) assigned to the server application (SA).

## Revendications

1. Procédé de réduction du volume de transport de données dans des réseaux de données, des données relatives au contenu déjà transmises d'une application serveur (SA) à un client (CA) par l'intermédiaire d'un serveur proxy (MP, RP) et un serveur proxy central (CP) sont enregistrées temporairement auprès du client (CA) par ledit serveur proxy (MP, RP) selon la méthode appelée "caching" pour être réutilisées ultérieurement, **caractérisé en ce que** le serveur proxy (CP)
reçoit une requête de transmission de données (Req₁) spécifiée par une première adresse URL, envoie ladite requête à une application serveur (SA),
reçoit une première réponse (Resp₁) de ladite application serveur (SA), envoie celle-ci, conjointement avec un condensé de message (MD) calculé, audit client (CA) par l'intermédiaire dudit serveur proxy (MP, RP),
reçoit une requête de transmission de données (Reqₖ) spécifiée par une deuxième adresse URL, envoie celle-ci à une application serveur (SA),
reçoit une deuxième réponse (Respₖ) de ladite application serveur et, au cas ledit condensé de message (MD), calculé à l'aide de ladite réponse (Respₖ), dans une liste, transmet une réponse au serveur proxy (MP, RP) ayant un en-tête signalisant le fait que, en indiquant ledit condensé de message (MD), les données relatives au contenu peuvent être trouvées comme clé sur ledit serveur proxy (MP, RP), sans nécessiter de transmettre les données relatives au contenu de nouveau.

2. Procédé selon la revendication 1, **caractérisé en ce que** l'on utilise comme algorithme de condensé de message dans ledit serveur proxy central (CP) assigné à ladite application serveur (SA) un algorithme MD5 ou SHA-1 lors de l'évaluation comparatif dudit condensé de message (MD) avec fonctionnalité de hachage, lesdits algorithmes facilitant une comparaison de données en regard de leur identité.

3. Procédé selon les revendications 1 ou 2, **caractérisé en ce que** ledit client (CA) avec son proxy (MP, RP) est opéré dans un terminal d'information mobil sans fil (WID) permettant l'utilisation dans de services de données comme WAP ou Web.

4. Procédé selon la revendication 3, **caractérisé en ce que** la communication entre ledit proxy (MP) du client (CA) disposé dans ledit terminal d'information mobil sans fil (WID) et ledit serveur proxy central (CP) assigné à ladite application serveur (SA) est effectuée soit sur un réseau de téléphone mobile public, soit par l'intermédiaire d'un proxy résidentiel (RP) communiquant sur une liaison de radio à courte distance, par exemple Bluetooth ou W-LAN, avec le proxy (MP) du client (CA), et sur un réseau fixe public auquel sont raccordés ledit proxy résidentiel (RP) et ledit serveur proxy central (CP) assigné à ladite application serveur (SA).

5. Procédé selon l'une quelconque des revendications précédentes, **caractérisé en ce que** le proxy (MP) assigné au client (CA) est intégré dans une application client.

6. Procédé selon l'une quelconque des revendications précédentes, **caractérisé en ce que** le serveur proxy central (CP) est intégré dans une application serveur (SA).

7. Procédé selon l'une quelconque des revendications précédentes, **caractérisé en ce que** des données statistiques sont relevées dans ledit serveur proxy central (CP) assigné à ladite application serveur (SA).
